Europäisches Patentamt

(19) European Patent Office

Office européen des brevets

(11) Publication number: **0 288 103**
**A2**

## (12) EUROPEAN PATENT APPLICATION

(21) Application number: 88200624.0

(51) Int. Cl.4: **A23L 2/02**

(22) Date of filing: 05.04.88

(30) Priority: 13.04.87 GB 8708807

(43) Date of publication of application:
26.10.88 Bulletin 88/43

(84) Designated Contracting States:
AT BE CH DE FR GB GR IT LI LU NL SE

(71) Applicant: THE PROCTER & GAMBLE
COMPANY
One Procter & Gamble Plaza
Cincinnati Ohio 45202(US)

(84) CH GB GR LI SE AT

(71) Applicant: Procter & Gamble European
Technical Center (Naamloze Vennootschap)
Temselaan 100
B-1820 Strombeek-Bever(BE)

(84) BE DE FR IT LU NL

(72) Inventor: Moore, Katherine Louise
1343 Fleming Street
Cincinnati Ohio 45206(US)

(74) Representative: Canonici, Jean-Jacques et al
Procter & Gamble European Technical
Center N.V. Temselaan 100
B-1820 Strombeek-Bever(BE)

(54) Orange juice-containing beverage.

(57) An orange juice containing beverage is disclosed, wherein the orange juice component has a brix/acid ratio of from 11 to 13, and an iso-citric acid content of at least 110 mg/l of the orange juice component.

The orange juice component is obtained by mixing two naturally occurring orange juices, typically early-season and late-season, respectively.

EP 0 288 103 A2

## ORANGE JUICE CONTAINING BEVERAGE

Background of the Invention

The present invention relates to a beverage which comprises an orange juice component which could make up from 10% to 100% of the beverage. Such beverages include soft drinks containing about 10% orange juice; so called nectars containing on the order of 50% orange juice, and of course processed orange fruit. As compared to freshly squeezed orange juice, processed orange juice has a deficiency in flavour impact. This deficiency is even more pronounced if the orange juice is used in diluted form as in the so called nectars or in soft drinks. It has been proposed to separate volatile flavour components from the orange juice prior to the main processing of the orange juice and reblending these volatiles afterwards. These processes are by their nature expensive. In any event it is desirable to further boost the flavour impact of orange juice containing beverages, particularly orange juice containing beverages that utilize orange juice at reduced levels (e.g. 50% or 10%).

It is therefore an object of the present invention to provide a beverage which comprises a processed orange juice component having an increased flavour impact. It is a further object of this invention to provide orange juice containing beverages which employ the orange juice component at levels in the range of from 10% to 100%, preferably from 10% to 60%.

Summary of the Invention

The present invention relates to a beverage comprising an orange juice component which makes up from 10% to 100%, preferably from 10% to 60%, of said beverage. The orange juice component of the beverage has a Brix/acid ratio of from 11 to 13 and an iso-citric acid content of at least 110 mg/l of the orange juice component.

The orange juice component of the beverage of this invention is obtained by blending a first orange juice having a Brix/acid ratio smaller than 10 and an iso-citric acid content of at least 130 mg/l with a second orange juice having a Brix/acid ratio of greater than 11 and an iso-citric acid content of less than 100 mg/l. In a preferred embodiment the orange juice component of the beverage has a citric acid content of at least 10 g/l and is obtained by blending a first orange juice having a citric acid content of at least 12 g/l and a second orange juice having a citric acid content of less than 9.5 g/l.

Detailed Description of the Invention

The present invention relates to beverages containing an orange juice component. The orange juice component of the beverages of this invention is characterized in that it has a Brix/acid ratio of from 11 to 13 and an iso-citric acid content of at least 110 mg/l of the orange juice component.

A Brix/acid ratio of from 11 to 13 is not at all uncommon for an orange juice. In fact such Brix/acid ratios are more or less indicative of a good quality orange juice. By the same token, an iso-citric acid content of 110 mg/l or more is not uncommon for a natural orange juice, be it considerably higher than the target value of 90 mg/l. It is believed, however, that iso-citric acid levels in excess of 110 mg/l are only found in natural orange juice having a Brix/acid ratio of less than 11, with a possible exception of Israeli Shamouti oranges.

The orange juice component of the beverages of this invention are obtained by blending two different orange juices. The first orange juice has a Brix/acid ratio of less than 10 and an iso-citric acid content of 130 mg/l or greater; the second orange juice has a Brix/acid ratio greater than 11 and an iso-citric acid of less than 100 mg/l. In practical terms this means that the first orange juice is obtained from oranges that are harvested in the early harvest season whereas the second oranges are obtained from oranges that are harvested in the late harvest season. The first orange juice would be considered as being of very poor quality as its Brix/acid ratio is smaller than what is normally considered acceptable and its iso-citric acid is greater than what is considered acceptable. Yet, when this early-season juice is mixed with an appropriate amount of late-season juice, a blend is obtained which has very good taste characteristics and has a flavour impact that is greater than that of natural orange juice. This makes the orange juice blend particularly suitable for use as the orange juice component in a soft drink which contains about 10% orange juice, or in a nectar which contains about 50% orange juice. In a preferred embodiment of the invention the orange juice component has a citric acid content of at least 10 g/l and is preferably obtained by blending a first orange juice having a citric acid content of at least 12 g/l and a second orange juice having a citric acid content less than 9.5 g/l.

Although it may be possible to obtain an orange juice having the above composition characteristics by simply adding iso-citric acid and, optionally citric acid to a natural single cut orange juice, it is believed that the early-season and late-season juices bring in flavor components, which escape analysis, but which significantly contribute to the improved flavour impact as is obtained by blending these two kinds of orange juice. Therefore, preferred herein are beverages of which the orange juice component has a Brix/acid ratio of from 11 to 13, an iso-citric content of at least 110 mg/l and preferably a citric acid content of at least 10 g/l and is obtained by blending a first orange juice and a second orange as described herein above.

EXAMPLES

Representtive early-season Brazilian orange juices were analyzed for Brix/acid ratio, iso-citric acid content, and citric acid content, as shown below:

A. Early-Season Orange Juices

| Sample No. | Brix/acid ratio | Iso-citric acid (mg/l) | Citric acid (g/l) |
|---|---|---|---|
| 1 | 8.3 | 155.4 | 15.0 |
| 2 | 8.6 | 147.6 | 13.9 |
| 3 | 9.8 | 132.2 | 12.1 |
| 4 | 9.6 | 140.6 | 12.8 |
| 5 | 9.5 | 140.6 | 12.6 |

The same analyses were carried out on representative late-season Brazilian orange juices, as shown below:

B. Late-Season Orange Juices

| Sample No. | Brix/acid ratio | Iso-citric acid (mg/l) | Citric acid (g/l) |
|---|---|---|---|
| 1 | 13.7 | 77.8 | 9.3 |
| 2 | 14.6 | 95.9 | 8.2 |
| 3 | 12.8 | 91.9 | 8.1 |
| 4 | 12.5 | 94.2 | 9.5 |

An early-season orange juice similar to those shown in Table A was blended with a late-season orange juice similar to those shown in Table B in a 1:1 ratio. The resulting orange juice has a Brix/acid ratio of 12.1, an iso-citric acid content of 115.8 mg/l, and a citric acid content of 10.2 g/l. An orange juice nectar comprising 50% of this blend has a surprisingly pleasant taste and strong orange juice flavor impact.

**Claims**

1. A beverage comprising an orange juice component which makes up from 10% to 100% of said beverage, characterized in that said orange juice component has a Brix/Acid ratio of from 11 to 13 and an iso-citric acid content of at least 110 mg/l of the orange juice component.

2. A beverage according to claim 1 wherein the orange juice component is a blend of a first orange juice having a Brix/Acid ratio smaller than 10 and an iso-citric acid content of 130 mg/l or greater; and a second orange juice having a Brix/Acid ratio greater than 11 and an iso-citric acid content of less than 100 mg/l.

3. A beverage according to claim 2 wherein the orange juice component has a citric acid content of at least 10 g/l; the first orange juice has a citric acid content of at least 12, and the second orange juice has a citric acid content of less than 9.5 g/l.

4. A beverage according to any one of claims 1-3 wherein the orange juice component makes up from 10% to 60% of the beverage.

5. A process for preparing a beverage comprising an orange juice component, comprising the step of blending a first orange juice having a Brix/Acid ratio smaller than 10 and an iso-citric acid content of 130 mg/l or greater; and a second orange juice having a Brix/Acid ratio greater than 11 and an iso-citric acid content of less than 100 mg/l.

6. A process according to Claim 4 wherein the first orange juice component has a citric acid content of at least 10 g/l; the first orange juice has a citric acid content of at least 12, and the second orange juice has a citric acid content of less than 9.5 g/l.

7. A process according to claim 5 or 6 wherein the orange juice component makes up from 10% to 100% of the beverage.

8. A process according to claim 7 wherein the orange juice component makes up from 10% to 60% of the beverage.